**Europäisches Patentamt**

**European Patent Office**

**Office européen des brevets**

(19)

(11) Veröffentlichungsnummer : **0 041 164**
**B1**

(12)

# EUROPÄISCHE PATENTSCHRIFT

(45) Veröffentlichungstag der Patentschrift :
**15.08.84**

(21) Anmeldenummer : **81103712.6**

(22) Anmeldetag : **14.05.81**

(51) Int. Cl.³ : **F 16 P   1/02, B 23 Q 11/08**

(54) **Gliederschürze.**

(30) Priorität : **30.05.80 DE 3020621**

(43) Veröffentlichungstag der Anmeldung :
**09.12.81 Patentblatt 81/49**

(45) Bekanntmachung des Hinweises auf die Patenterteilung : **15.08.84 Patentblatt 84/33**

(84) Benannte Vertragsstaaten :
**AT BE CH DE FR GB IT LI LU NL SE**

(56) Entgegenhaltungen :
**CH-A-   359 871**
**CH-A-   515 835**
**DE-A- 2 462 091**
**DE-C-   938 281**
**DE-C-   942 431**
**DE-U- 1 827 578**
**GB-A- 1 036 046**

(73) Patentinhaber : **Schmidberger, Peter**
**Münchner Strasse 104**
**D-8043 Unterföhring (DE)**

(72) Erfinder : **Schmidberger, Peter**
**Münchner Strasse 104**
**D-8043 Unterföhring (DE)**
Erfinder : **Kowal, Herbert**
**Pappelgasse 18**
**D-8044 Lohhof (DE)**

(74) Vertreter : **Altenburg, Udo, Dipl.-Phys. et al**
**Patent- und Rechtsanwälte Bardehle-Pagen-**
**berg-Dost-Altenburg & Partner Postfach 86 06 20**
**D-8000 München 86 (DE)**

Jouve, 18, rue St-Denis, 75001 Paris, France

EP 0 041 164 B1

**Beschreibung**

Die Erfindung bezieht sich auf eine Gliederschürze zum Schutz von Führungsbahnen, Antriebsaggregaten, unfallträchtigen Stellen oder dergleichen an Werkzeugmaschinen gemäß Oberbegriff des Anspruchs 1.

Bei einer bekannten Gliederschürze dieser Art werden Metallprofile an der Ober- und Unterseite eines Polyestergewebes durch Vernietung aufgebracht. Die bekannte Gliederschürze hat ein hohes Eigengewicht und daher ungenügende Gleiteigenschaften. Darüberhinaus ist die Herstellung dieser bekannten Gliederschürze zeitaufwendig und kostspielig (Firmenprospekt der Gebr. Hennig GmbH).

Bei einer anderen bekannten Gliederschürze werden Leichtmetall-Halbrundlamellen mittels Verklebung auf ein polyurethanisiertes Kunststoffgewebe aufgebracht und teilweise zur besseren Haltbarkeit an den äußeren Rändern vernietet. Da die Verklebung nicht definitiv bestimmbar ist, ergeben sich größere Unsicherheiten in bezug auf die Haftung der Lamellen auf dem Kunststoffgewebe. Das Herstellungsverfahren ist darüber hinaus verhältnismäßig kompliziert und störanfällig. Schließlich sind diese Gliederschürzen nur begrenzt haltbar, da schwere Späne bzw. aggressive Flüssigkeiten die Verklebung hinterwandern können (Firmenprospekt der Beakbane Ltd.).

Bei einer noch weiteren bekannten Gliederschürze der eingangs genannten Art werden eloxierte Aluminiumlamellen durch ihre besondere Ausbildung scharnierartig aneinandergefügt und an den äußeren Stirnflächen verschraubt, um ihren Zusammenhalt zu gewährleisten. Dies bedingt eine unhandliche Mindestgröße der Lamellen mit einer daraus folgenden geringen Biegsamkeit der Gliederschürze. Diese bekannte Schürze ist daher nur begrenzt einsetzbar. Außerdem sind die Scharniere sehr schmutzempfindlich, was eine Funktionsstörung mit sich bringen kann (Firmenprospekt der Gebr. Hennig GmbH).

Bei der im Oberbegriff des Anspruchs 1 gewürdigten bekannten Gliederschürze (GB-A 1 036 046) sind die Lamellen auf der Ober- und/oder Unterseite der formschlüssig untereinander verbindbaren Elemente befestigt. Diese Elemente weisen zur formschlüssigen Verbindung untereinander an einer Seite jeweils eine zylinderförmige Ausnehmung und an der anderen Seite jeweils eine entsprechende Verdickung auf. Die scharnierartige Aneinanderreihung der Elemente bedingt eine unhandliche Mindestgröße der Elemente bzw. Lamellen mit einer daraus folgenden geringen Biegsamkeit der Gliederschürze. Die zur Versteifung, Verringerung der Reibung auf der Unterseite und/oder zur Schaffung einer einheitlichen glatten Oberfläche vorgesehenen Lamellen können z. B. durch Klebung oder Nietung mit den Elementen verbunden werden, was bei Klebung besonders die Funktionsfähigkeit der Abdeckung und bei Nietung besonders den Herstellungsaufwand beeinträchtigt.

Die Aufgabe der vorliegenden Erfindung besteht darin, die Unzulänglichkeiten der bekannten Gliederschürzen zu vermeiden und eine Gliederschürze der in Frage stehenden Art zu schaffen, die kostengünstig und einfach herstellbar, äußert haltbar, leicht handhabbar und sehr biegsam ist.

Diese Aufgabe wird bei einer Gliederschürze gemäß Oberbegriff des Anspruchs 1 erfindungsgemäß durch die kennzeichnenden Merkmale des Anspruchs 1 gelöst. Die erfindungsgemäße Gliederschürze läßt sich, wie dies insbesondere im Verfahrensanspruch 5 beansprucht wird, kostengünstig und einfach herstellen, wobei insbesondere fertigungsbedingte Toleranzen der Elemente und der Lamellen leicht ausgeglichen werden können. Durch die erfindungsgemäße Ausbildung der formschlüssig verbindbaren Bereiche der Elemente und Lamellen in Form von sich verjüngenden Stegen und Schlitzen wird eine große Oberflächendichtigkeit der Abdeckung erzielt, so daß Umwelteinflüsse wie schwere heiße Späne und agressive Flüssigkeiten keine Zerstörung der Abdeckung bewirken können. Die Haltbarkeit der erfindungsgemäßen Abdeckung wird auch durch die im Unterschied zur scharnierartigen Verbindung wenig störanfällige feste Verbindung der Elemente mit den Lamellen gemäß der Erfindung gefördert. Schließlich ist die erfindungsgemäße Gliederschürze bei größter Oberflächendichtigkeit aufgrund der sich verjüngenden, formschlüssig fest verbindbaren Bereiche der Elemente und Lamellen und des zwischen den sich verjüngenden Stegen eines Elementes liegenden dünnen biegsamen Abschnitts leicht handhabbar und äußerst biegsam, wobei insbesondere die Lamellenbreite keinen konstruktiven Mindestgrößen unterliegt.

Aus dem DE-U-1 827 578 und der CH-A-359 871 ist es an sich bekannt, bei Flächenelementen jeweils ein Element mit zwei benachbarten Lamellen formschlüssig fest zu verbinden. Ein Bezug zu Werkzeugmaschinen ist dort jedoch nicht vorhanden und ein Hinweis auf die anderen erfindungswesentlichen Merkmale ist nicht gegeben.

Bei einer vorteilhaften Ausgestaltung der erfindungsgemäßen Gliederschürze wird die feste Verbindung zwischen Element und Lamelle durch zahnartige Rippen an den Wänden der sich verjüngenden Schlitze der Lamelle zusätzlich gefördert.

Durch eine abgeflachte untere Breitseite in Verbindung mit einer konvex ausgebildeten oberen Breitseite der Lamellen kann erfindungsgemäß gleichzeitig die Oberflächendichtigkeit, d. h. die Haltbarkeit und die Biegsamkeit der Gliederschürze noch weiter verbessert werden.

Vorzugsweise bestehen die Lamellen aus Aluminium und die Elemente aus Polyurethan. Dies erleichtert die Herstellung dieser Teile, z. B. im rationellen Extrudierverfahren, und reduziert das Gewicht der Gliederschürze, wodurch die Haltbarkeit und Handhabbarkeit erhöht wird.

Im nachfolgenden wird ein Ausführungsbeispiel der vorliegenden Erfindung in Verbindung mit der Zeichnung beschrieben. Darin zeigen :

Figur 1 ein Lamellenprofil der erfindungsgemäßen Gliederschürze in vergrößertem Maßstab,

Figur 2 ein biegsames Verbindungselementprofil der erfindungsgemäßen Gliederschürze in vergrößertem Maßstab und

Figur 3 einen Teil einer erfindungsgemäßen Gliederschürze.

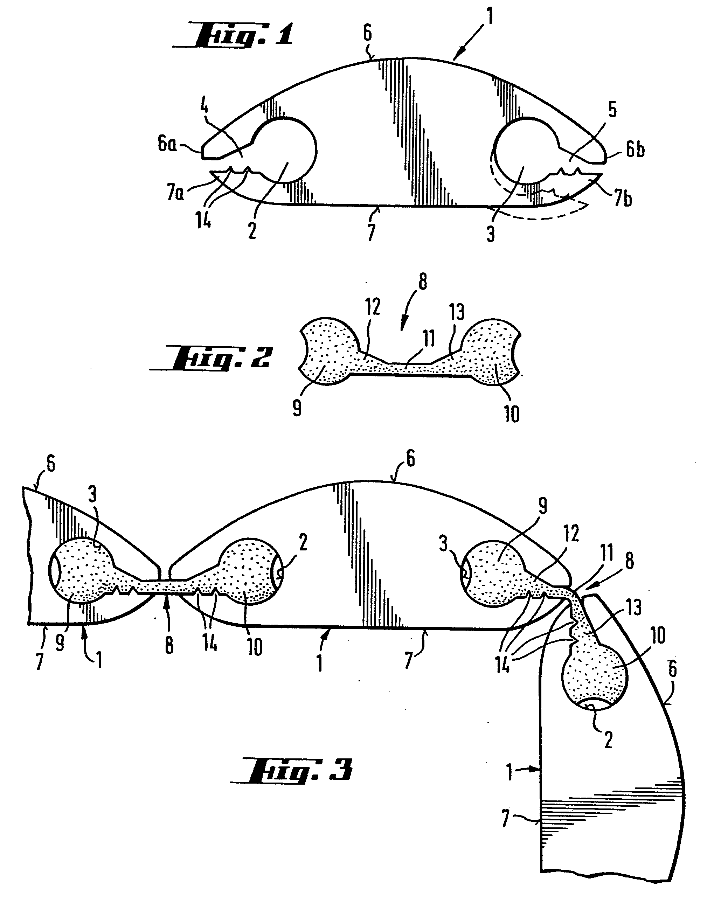

In Fig. 1 ist ein Lamellenprofil 1 mit zylinderförmigen Ausnehmungen 2 und 3 dargestellt, die zu den beiden Schmalseiten des Profils 1 hin über sich verjüngende Schlitze 4 und 5 geöffnet sind. Zum Beispiel im unteren Bereich der Schlitze 4, 5 sind zahnartige Rippen 14 angeordnet. Die Oberseite 6 des Profils 1 ist konvex gewölbt mit vertikalen Stegen 6a und 6b an den oberen seitlichen Rändern. Die Unterseite 7 des Profils 1 ist geradlinig abgeflacht mit einer zurückspringenden Form an den unteren seitlichen Rändern 7a und 7b. Das Profil 1 besteht z. B. aus Aluminium, wobei praktische Abmessungen des Profils ungefähr einem Fünftel der in Fig. 1 dargestellten Abmessungen entsprechen.

In Fig. 2 ist ein biegsames Verbindungselementprofil 8 mit zylinderförmigen, an den Schmalseiten angeordneten Verdickungen 9 und 10 dargestellt. Die Verdickungen 9 und 10 entsprechen in ihren Abmessungen im wesentlichen den Ausnehmungen 3 und 2 und sind über sich verjüngende Stege 12 und 13 mit einem mittleren, stark biegsamen Abschnitt 11 (vgl. insbesondere Fig. 3) des Profils 8 mit dünner Wandstärke, z. B. 0,5 mm stark, verbunden. Das Profil 8 besteht vorzugsweise aus hochreißfestem Kunststoff, z. B. Polyurethan, wobei praktische Abmessungen des Profils 8 ungefähr einem Fünftel der in Fig. 2 dargestellten Abmessungen entsprechen.

In Fig. 3 ist eine aus den Profilen 1 und 8 bestehende Gliederschürze dargestellt, wobei die beiden rechts dargestellten Lamellenprofile 1 rechtwinkelig zueinander angeordnet sind und das sie verbindende Verbindungselementprofil 8 dementsprechend um ca. 90° unter im wesentlichen reiner Biegebeanspruchung des Abschnitts 11 gebogen ist.

Die Montage der Profile 1 und 8 zu einer Gliederschürze erfolgt folgendermaßen : Die Ausnehmungen 2 und 3 sind im Ausgangszustand der Profile 1 schnabelartig nach unten um z. B. ca. 10 bis 15° geöffnet (in Fig. 1 für die Ausnehmung 3 gestrichelt dargestellt). Nach Einlegen der Verbindungselementprofile 8 bzw. der seitlichen Verdickungen 9 und 10 in die jeweils angrenzenden geöffneten Ausnehmungen 3 und 2 werden die Lamellenprofile 1 bzw. die geöffneten Ausnehmungen 2 und 3 zusammengepreßt, wobei sich eine feste formschlüssige Verbindung mit den Verbindungselementprofilen 8 bzw. deren seitlichen Verdickungen 10 und 9 ergibt. Für eine zusätzliche Festlegung der Verbindungselementprofile 8 in den Lamellenprofilen 1 greifen die zahnartigen Rippen 14 beim Zusammenpressen in die Stege 12 und 13 der Verbindungselementprofile ein.

**Ansprüche**

1. Gliederschürze zum Schutz von Führungsbahnen, Antriebsaggregaten, unfallträchtigen Stellen oder dergleichen an Werkzeugmaschinen mit einzelnen an ihrer Längsseite aneinandergereihten starren Lamellen (1), welche durch formschlüssig verbindbare Elemente (8) so miteinander verbunden sind, daß die Lamellen gegeneinander verschwenkbar sind, dadurch gekennzeichnet, daß jeweils ein Element (8) mit zwei benachbarten Lamellen (1) formschlüssig fest verbunden ist, daß die formschlüssig verbindbaren Bereiche beim Element mindestens teilweise als sich verjüngende Stege (12, 13) und bei der Lamelle (1) mindestens teilweise als sich verjüngende Schlitze (4, 5) ausgebildet sind, und daß zwischen den beiden sich verjüngenden Stegen (12, 13) eines Elementes ein biegsamer Abschnitt (11) ausgebildet ist.

2. Gliederschürze nach Anspruch 1, dadurch gekennzeichnet, daß an den Wänden der sich verjüngenden Schlitze (4, 5) zahnartige Rippen (14) angeordnet sind.

3. Gliederschürze nach Anspruch 1 oder 2, dadurch gekennzeichnet, daß die Lamellen (1) an ihren unteren seitlichen Rändern (7a, 7b) eine zurückspringende Form aufweisen und auf der unteren Breitseite (7) abgeflacht und auf der oberen Breitseite (6) konvex ausgebildet sind.

4. Gliederschürze nach mindestens einem der Ansprüche 1 bis 3, dadurch gekennzeichnet, daß die Lamellen aus Aluminium und die Elemente aus Polyurethan bestehen.

5. Verfahren zur Herstellung einer Gliederschürze nach einem der Ansprüche 1 bis 4, dadurch gekennzeichnet, daß die formschlüssig verbindbaren Bereiche (2, 4 ; 3, 5) der Lamellen (1) zunächst schnabelartig, z. B. nach unten um ca. 10° bis 15° geöffnet ausgebildet werden, die formschlüssig verbindbaren Bereiche (12, 9 ; 13, 10) der Elemente (8) in die formschlüssig verbindbaren Bereiche der Lamellen eingelegt und die formschlüssig verbindbaren Bereiche der Lamellen zur formschlüssigen und festen Verbindung mit den formschlüssig verbindbaren Bereichen der Elemente zusammengepreßt werden.

**Claims**

1. Link-type apron arrangement for protecting guide tracks, drive assemblies, locations which are liable to cause accidents, or the like, in machine tools, comprising individual rigid bar members aligned along their longitudinal side and interconnected by positively connectable elements in such a manner that the bar members can be pivoted relatively to one another characterized in that one element (8) is positively fixed to two adjacent bar members (1) respectively, that the positively connectable portions are at least partly in the form of tapering web portions (12, 13) in the element and at least partially in the form of tapering slots (4, 5) in the bar member, and that a bendable section (11) is formed between the two tapering web portions (12, 13) of an element.

2. Link-type apron arrangement according to claim 1, characterized in that tooth-like ribs (14) are provided on the walls of the tapering slots (4, 5).

3. Link-type apron arrangement according to claim 1 or 2, characterized in that the bar members (1) are of a receding form at their bottom lateral edges (7a, 7b) and are flattened on the bottom broad side (7) and are of convex configuration on the top broad side (6).

4. Link-type apron arrangement according to at least one of claims 1 to 3, characterized in that the bar members are made of aluminum and the elements of polyurethane.

5. A method of producing a link-type apron arrangement according to one of claims 1 to 4, characterized in that the positively connectable portions (2, 4 ; 3, 5) of the bar members (1) are first opened in a beak-like manner, for example downwardly for about 10° to 15°, the positively connectable portions (12, 9 ; 13, 10) of the elements (8) are inserted in the positively connectable portions of the bar members are pressed together for positively and fixedly connecting the bar members to the positively connectable portions of the elements.

## Revendications

1. Tablier articulé destiné à protéger, entre autres, des pistes de guidage, des groupes d'entraînement ou des zones sujettes à accidents dans des machines-outils, comportant des lamelles rigides individuelles (1) qui sont alignées en juxtaposition par leur côté longitudinal et sont reliées les unes aux autres, par des organes (8) solidarisables par conformation, de telle sorte que ces lamelles puissent pivoter les unes par rapport aux autres, caractérisé par le fait qu'un organe (8) est à chaque fois assujetti par conformation à deux lamelles contiguës (1) ; par le fait que les régions solidarisables par conformation sont réalisées au moins partiellement, sur l'organe, sous la forme de branches (12, 13) de section décroissante et au moins partiellement, sur la lamelle (1), sous la forme de fentes (4, 5) de section décroissante ; et par le fait qu'un tronçon souple (11) est intercalé entre les deux branches (12, 13) à section décroissante d'un organe.

2. Tablier articulé selon la revendication 1, caractérisé par le fait que des nervures (14) semblables à des dents sont situées sur les parois des fentes (4, 5) de section décroissante.

3. Tablier articulé selon la revendication 1 ou 2, caractérisé par le fait que les lamelles (1) présentent une forme relevée sur leurs bords latéraux inférieurs (7a, 7b) et sont réalisées aplaties sur la face inférieure (7) de leur largeur et convexes sur la face supérieure (6) de leur largeur.

4. Tablier articulé selon au moins l'une des revendications 1 à 3, caractérisé par le fait que les lamelles consistent en de l'aluminium et les organes sont en polyuréthane.

5. Procédé de fabrication d'un tablier articulé selon l'une des revendications 1 à 4, caractérisé par le fait que les régions (2, 4 ; 3, 5) solidarisables par conformation des lamelles (1) sont tout d'abord réalisées ouvertes à la manière de becs, par exemple vers le bas d'environ 10° à 15°, les régions (12, 9 ; 13, 10) solidarisables par conformation des organes (8) sont introduites dans les régions des lamelles solidarisables par conformation et les régions desdites lamelles solidarisables par conformation sont, en vue d'une liaison rigide par conformation, comprimées avec les régions desdits organes solidarisables par conformation.

_Fig. 1_

_Fig. 2_

_Fig. 3_